# FASCICULE DE BREVET EUROPEEN

(11) **EP 3 153 892 B1**
(45) Date de publication et mention de la délivrance du brevet: **12.05.2021**
(21) Numéro de dépôt: 16192702.5
(22) Date de dépôt: 06.10.2016
(51) Int. Cl.: G01W 1/02, G08B 19/02, G01K 3/00, G01N 21/3554

(54) **DISPOSITIF POUR DÉTERMINER LE RISQUE DE GEL**
VORRICHTUNG ZUM BESTIMMEN DER FROSTGEFAHR
DEVICE FOR DETERMINING THE RISK OF FREEZING

(30) Priorité: 08.10.2015 FR 1559577
(43) Date de publication de la demande: 12.04.2017
(73) Titulaire: Greensystech, 14540 Bourguébus (FR)
(72) Inventeur: Papa Talla Fall, Mohamed, 14123 lfs (FR); Kouassi, Kouakou, 14123 lfs (FR); Poulain, Laurent, 14000 Caen (FR); Lebigot, Fabien, 35100 Lourdes (FR)
(74) Mandataire: Grünecker Patent- und Rechtsanwälte PartG mbB

(56) Documents cités:
- DE-A1- 3 148 938
- FR-A1- 2 673 269
- US-A- 5 418 522
- US-A1- 2015 035 548
- US-A1- 2015 192 466
- US-B1- 6 456 200

## Description

La présente invention concerne un dispositif pour déterminer le risque de gel, un système pour informer du risque de gel comprenant plusieurs desdits dispositifs et une route avec un ou plusieurs desdits dispositifs et/ou un ou plusieurs desdits systèmes.

Actuellement les mesures de salage en cas de gel des routes et/ou des pistes d'atterrissage par exemple, ainsi que de fermeture de ces dernières sont prises en fonction des conditions météorologiques transmises par les centres de météorologie aux différentes préfectures.

Cependant ces types d'information peuvent être transmises avec un décalage ou manquent de précisions locales, les mesures de salage peuvent alors être mises en œuvre trop tard pour protéger les usagers des effets du gel sur la chaussée, entraînant des embouteillages et/ou des accidents.

Il a déjà été proposé de développer plusieurs dispositifs, tel que dans US 2015/0035548 A1 et DE 31 48 938 A1, ou encore comme dans le brevet US 3 524 043, qui propose un dispositif pour indiquer la température d'un corps afin de déterminer le moment où la surface d'une route atteint le point de gel, Ce dispositif comprend un élément pour mesurer la température de type transistor et un élément pour mesurer le taux d'humidité. En outre, le brevet US 5 418 522 propose un système comprenant un capteur d'humidité et un capteur de température pour contrôler la surface d'une route et déterminer le risque de gel sur celle-ci. De plus, lorsque les capteurs ont reconnus le risque de gel, un signal de commutation est produit pour commander le chauffage de la surface gelée.

Cependant, ces dispositifs sont difficiles à mettre en place, cela est du notamment aux installations pour leur alimentation en énergie, entraînant alors une augmentation de la consommation d'énergie et donc des coûts de mise en place. De plus, ils ne permettent pas aux collectivités locales de gérer les intempéries en prévenant les usagers, par exemple les automobilistes.

Il existe donc un premier objet qui est de produire de nouveaux dispositifs, pour déterminer le risque de gel, efficaces et faciles à mettre en place tout en présentant de faibles coûts énergétiques, afin d'améliorer les mesures de prévention pour permettre aux services locaux d'anticiper les mesures de salage et/ou de fermeture de routes dangereuses.

Pour déterminer le risque de gel, il est connu de corréler les mesures de température avec des mesures d'humidité. Il est un deuxième objet, indépendant du premier, de la présente invention qui est de proposer un détecteur d'humidité adapté pour contribuer à la détermination du risque de gel.

Le premier objet de la présente invention est atteint par un dispositif selon la revendication 1, c'est à dire un dispositif pour déterminer le risque de gel comprenant une unité transductrice comme moyen d'alimentation en électricité autonome et au moins un capteur de température. Le terme « unité - transductrice » signifie ici un dispositif qui assure une conversion d'une grandeur physique en une autre, ici de l'électricité. Ainsi, le dispositif de la présente invention sera facile à mettre en place et les mesures faites par celui-ci permettront d'obtenir, en temps réel, une précision quant aux résultats et avis sur le risque de gel. Par conséquent, les services locaux pourront anticiper les mesures de salage et/ou de fermeture de routes dangereuses.

Selon l'invention, ladite unité transductrice utilise l'effet thermoélectrique pour ta génération d'électricité. En prenant avantage, par exemple, de la différence de température présente entre la surface du sol et dans la profondeur du sol, on peut créer suffisamment d'étectricité pour alimenter le dispositif.

Il peut être en outre préférable que l'unité transductrice soit placée à l'intérieur du dispositif entre une première et une seconde tige thermo-conductrice. Ainsi, le gradient de température entre l'extrémité haute de la première tige thermo-conductrice et l'extrémité basse de la seconde tige thermo-conductrice s'appliquera à l'unité transductrice via les tiges thermo-conductrices et permettra d'augmenter la distance effective entre l'entrée chaude et l'entrée froide pour accroitre le gradient de température au niveau de l'unité transductrice.

De préférence, la première et la seconde tige s'étendent de l'unité transductrice jusqu'aux surfaces extérieures opposées du dispositif. Comme cela, la distance effective entre l'entrée chaude et l'entrée froide est maximale pour optimiser le gradient de température.

Il peut être en outre préférable que les tiges thermo-conductrices soient pourvues de semelles thermo-conductrices à leurs extrémités. Ces semelles possèdent des surfaces agrandies par rapport aux dimensions des tiges pour favoriser les échanges de chaleur avec le milieu environnant.

Il peut être en outre préférable que l'unité transductrice et la première et seconde tige soient en outre entourées d'une ou plusieurs couches de matériaux thermo-isolants. De préférence, la première et la seconde tige sont isolées thermiquement l'une de l'autre par une ou plusieurs des couches de matériaux thermo-isolants. Ceci améliore encore le rendement du moyen d'alimentation car il limite les pertes de chaleur entre les entrées chaude et froide et l'unité transductrice.

Il peut être en outre préférable que le capteur de température soit dé-corrélé de l'énergie électrique apportée, comme par exemple pour un thermistor, Ceci permettra de s'affranchir du temps de réponse du capteur et ainsi consommer moins d'énergie électrique.

Il peut être en outre préférable que le capteur de température soit en contact thermique avec la première tige, en particulier introduit dans la première tige. La première tige thermo-conductrice étant en contact avec la surface du sol.

De préférence, les tiges ont une forme qui s'élargisse de l'unité transductrice vers la surface du dispositif. Ce qui améliore à la fois le rendement et la mesure de la température, puisque la surface du dispositif, et ainsi également du capteur de température, en contact avec l'air sera plus grande.

Il peut être en outre préférable que le dispositif de la présente invention comprenne en plus un moyen de communication pour transmettre les données du capteur de température. Grâce au moyen de communication, les collectivités locales vont pouvoir être alertée du risque de gel en temps réel. Ce qui permettra d'anticiper les mesures de salage ou encore la fermeture de route(s). Il peut être en outre préférable que le dispositif de la présente invention comprenne en outre un dispositif de stockage d'énergie, en particulier une batterie et/ou un condensateur et/ou un supercondensateur. Ainsi, même si la différence de température entre la première tige et la seconde est insuffisante pour récolter suffisamment d'énergie pour l'alimentation, le dispositif de stockage peut être utilisé pour alimenter le dispositif.

L'objet de la présente invention se rapporte aussi à un capteur d'humidité comprenant un boitier ouvert de façon à permettre une circulation de l'air avec à l'intérieur du boitier, au moins une source de lumière, comme un laser ou une LEDI et au moins un capteur optique, comme une photorésistance et/ou une photodiode et/ou un phototransistor. Ce capteur d'humidité est configuré pour mesurer le taux d'humidité grâce à l'au moins une source de lumière et l'au moins un capteur optique. En effet, pour cela, l'air s'engouffre dans la structure ouverte du capteur d'humidité. Lorsque l'air est humide, une ou plusieurs gouttelettes se condensent à l'intérieur du capteur d'humidité. Leur présence perturbe les faisceaux lumineux émanant de l'au moins une source de lumière et allant à l'au moins un capteur optique, alors le capteur d'humidité fournit une information sur l'humidité en fonction de la puissance lumineuse reçue.

Selon l'invention, le boitier comprend un plafond intérieur, dans lequel le plafond intérieur comprend une ou plusieurs protubérances orientées vers le bas présentant un ou plusieurs points bas, de préférence seulement un, et en dessous duquel l'au moins une source de lumière et l'au moins un capteur optique sont agencés dans un plan immédiatement adjacent à l'un ou plusieurs points bas. Grâce à cet agencement, la gravité fera ruisseler et converger les gouttes d'eau formées au plafond vers au moins un point bas, Ainsi, l'eau des gouttelettes sera concentrée au niveau d'au moins un point bas. La goutte formée en ce point sera alors de taille plus importante pour un taux d'humidité donné, ce qui diffractera ou réfléchira une plus grande surface du front d'onde du ou des faisceaux lumineux passant adjacents à ce point et améliorera donc la sensibilité du capteur.

Il peut être en outre préférable que l'axe reliant la source de lumière et le capteur optique passe immédiatement adjacent à l'un ou plusieurs points bas. Ainsi, le faisceau de lumière émanant de la source de lumière, selon un axe immédiatement adjacent à l'au moins un point bas, pourra être reçu par le capteur optique de différentes façons. En effet, si l'air est sec, le faisceau émanant de la source de lumière sera reçu avec une intensité maximale par le capteur optique. Par contre, si l'air est humide, des gouttelettes vont converger vers un point bas du plafond du boitier, et le faisceau de lumière traversera la ou les gouttelettes et aura une intensité plus faible au niveau du détecteur.

Il peut être en outre préférable que l'au moins une source de lumière émette dans l'infrarouge, de préférence autour de 940nm, pour que le capteur optique ne soit pas gêné par la lumière ambiante.

Il peut être en outre préférable que la surface du plafond inférieur soit courbée en son milieu pour former une crête passant par l'un ou plusieurs points bas. Ainsi, en présence d'humidité, la ou les gouttelettes vont pouvoir converger vers la crête puis vers le point bas du plafond ce qui permet d'améliorer la collecte de l'eau condensé et donc de la détection d'humidité.

Il peut être en outre préférable que le boîtier présente des ouvertures au niveau des parois latérales, pour que l'air puisse circuler de part et d'autre du boîtier. Ainsi, l'air s'engouffrant facilement dans cette structure ouverte, la précision de mesure d'humidité est améliorée.

Il peut être en outre préférable que le boitier comprenne en outre un fond, dans lequel le fond comprend une surface intérieure, dans laquelle la surface intérieure comprend une ou plusieurs protubérances pour former au moins un point haut, ou au moins une crête, en face du ou des points bas du plafond intérieur.

De préférence, le trajet de chaque faisceau lumineux émanant de la source de lumière passe entre au moins un point haut du fond, et au moins un point bas du plafond. Ainsi, le risque d'une accumulation de poussières ou autre saletés entre la ou les sources de lumière et le ou les capteurs optiques est réduit. En effet, si le capteur d'humidité est placé sur le sol d'une route par exemple, de l'eau et des saletés, comme de la poussière, peuvent s'accumuler dans le boitier du capteur et empêcher le bon fonctionnement du capteur en obstruant la source de lumière, par exemple, et/ou le capteur optique. La forme de la surface intérieure du fond du boitier permet d'éloigner par effet de gravité ces particules de la trajectoire du faisceau lumineux.

Il peut être en outre préférable que les protubérances du fond du boitier soient regroupées pour former une crête par faisceau lumineux dont chaque crête, de forme courbe ou droite, est coplanaire avec la trajectoire du faisceau correspondant Ainsi de l'eau ou des saletés peuvent être éloignées des faisceaux lumineux.

De plus, il peut être préférable que la limite sur i'axe vertical de la surface intérieure du fond aux points d'une crête, ou ligne de faîte, tende vers zéro. Le terme « tend vers zéro » signifie que l'extrémité est pointue, ainsi plus on se rapproche de la pointe de la crête, ou ligne de faite, plus l'épaisseur diminue. Alors les résidus, par exemple saletés ou gouttes d'eau, ne pourront s'accrocher à la pointe ; ils tomberont, ou ruissèleront, d'un côté ou de l'autre de la pointe en raison de la gravité.

En outre, il est préférable que la surface intérieure du fond s'aplatisse progressivement vers les ouvertures du boitier. De cette façon, tout ce qui repose sur le fond du boitier peut être évacué à l'extérieur via des courants d'air ou d'eau qui suivent le profil du fond du boitier du capteur d'humidité.

De préférence, le boitier du capteur d'humidité est rigide, en particulier en acier, en fonte ou en fer. Grâce à cela, le capteur d'humidité est résistant aux chocs. Ainsi, si le capteur est placé à la surface d'une route, il peut résister au poids d'une voiture ou d'un camion, si ces derniers lui roulent dessus.

Il peut être en outre préférable que le plafond intérieur soit au moins partiellement, de préférence entièrement, recouvert ou fait d'un matériau pour promouvoir la condensation, en particulier avec une résine. Ainsi, lorsque l'air humide s'engouffre dans le capteur d'humidité, les gouttelettes peuvent se former plus aisément sur la surface intérieure du plafond, améliorant donc la détection d'humidité.

Il est en outre préférable que le capteur d'humidité soit alimenté par une unité transductrice comme moyen d'alimentation en électricité autonome. Ainsi, le capteur d'humidité est autonome en énergie. De préférence, le capteur d'humidité peut être relié à un moyen de communication. Grâce au moyen de communication, les collectivités locales vont pouvoir être alertées en temps réel de la présence d'humidité aux abords d'une route par exemple. Ce qui permettra d'anticiper des mesures nécessaires comme des mesures de salages si les températures annoncées sont inférieures à zéro.

De préférence, le capteur d'humidité est en outre relié à un capteur de température. L'utilisation combinée de ces deux types de capteurs peut par exemple servir à détecter la présence de gel sur une route. La présence de gel peut être confirmée au moment d'un dépassement de seuils prédéterminé d'humidité et de température.

Selon un autre mode de réalisation, le dispositif objet de la première invention peut comprendre en outre au moins un capteur d'humidité selon la seconde invention. Ainsi, l'analyse du risque de gel est plus précise car il se base sur les données du capteur de température et celles du capteur d'humidité. Selon un mode de réalisation, l'unité transductrice est utilisée pour alimenter la source de lumière et/ou le capteur optique. Selon un autre mode de réalisation, le moyen de communication peut être utilisé pour transmettre les données du capteur d'humidité. Selon un autre mode de réalisation, le dispositif de stockage d'énergie peut être utilisé pour alimenter la source de lumière et/ou le capteur optique.

Un objet de la présente invention se rapporte également à un système pour informer du risque de gel comprenant plusieurs dispositifs selon n'importe quel des modes de réalisation qui précèdent. Permettant ainsi d'augmenter la quantité d'énergie collectée.

Un objet de la présente invention concerne en outre un système pour informer du risque de gel comprenant plusieurs dispositifs, qui comprennent une unité transductrice selon n'importe quel des modes de réalisation précédents, un moyen de communication et un dispositif de stockage tels que décrits dans n'importe quel des modes de réalisation qui précèdent. Ainsi, ce système permet d'augmenter la quantité d'énergie collectée et améliore la disponibilité du système.

Un objet de la présente invention se rapporte également à une méthode pour déterminer le risque de gel comprenant les étapes:
a) allumer la source de lumière du capteur d'humidité et mesurer l'intensité du faisceau lumineux émanant de la source de lumière à l'aide du capteur optique du capteur d'humidité ;
b) envoyer les données du capteur d'humidité au moyen de communication ;
c) mesurer la température avec le capteur de température ;
d) envoyer les données du capteur de température au moyen de communication ;
e) analyse des données des capteurs pour déterminer le risque de gel.

De plus, l'objet de la présente invention est atteint par une route avec un ou plusieurs dispositifs pour déterminer le risque de gel selon n'importe quel des modes de réalisation qui précèdent et/ou un ou plusieurs système selon n'importe quel des modes de réalisation qui précèdent caractérisé en ce que le ou les dispositifs et/ou le ou les systèmes soient enterrés de telle sorte que la première tige soit au niveau du sol. Ainsi la détermination du risque de gel peut être réalisée à l'aide d'un dispositif et/ou d'un système facile à mettre en place.

La présente invention sera décrite plus en détails, à titre d'exemples ci-après, à l'aide des modes de réalisation avantageux faisant référence aux figures. Les modes de réalisation décrits ne sont possibles que pour certaines configurations dans lesquelles les caractéristiques individuelles peuvent être mises en œuvre indépendamment les unes des autres ou peuvent être omises. En outre, les éléments identiques à chacune des figures sont mentionnés avec des signes de référence identiques.
La Fig. 1 représente schématiquement le dispositif selon un premier mode de réalisation de la présente invention.
Les Fig. 2 et Fig. 3 représentent schématiquement le dispositif selon un second mode de réalisation de la présente invention.
La Fig. 4 représente schématiquement une route selon un troisième mode de réalisation de la présente invention.
La Fig. 5 représente schématiquement un système selon un quatrième mode de réalisation de la présente invention.
La Fig. 6 représente schématiquement un système selon un cinquième mode de réalisation de la présente invention.
La Fig. 7 représente schématiquement une coupe d'un système selon un sixième mode de réalisation de la présente invention.
Les Fig. 8a et 8b représentent schématiquement un capteur d'humidité selon la présente invention.
Les Fig. 9a, 9b et 9c représentent schématiquement une coupe du capteur d'humidité selon la présente invention.
Les Fig. 10a, 10b et 10c représentent schématiquement un capteur d'humidité selon un mode de réalisation de la présente invention.
La Fig. 11 représente schématiquement une coupe d'un capteur d'humidité selon un mode de réalisation de la présente invention.
La Fig. 12 représente schématiquement un dispositif pour déterminer le gel selon un mode de réalisation de la présente invention.
La Fig. 13 représente une route selon un mode de réalisation de la présente invention.
La Fig. 14 représente une méthode pour déterminer le risque de gel selon un mode de réalisation.

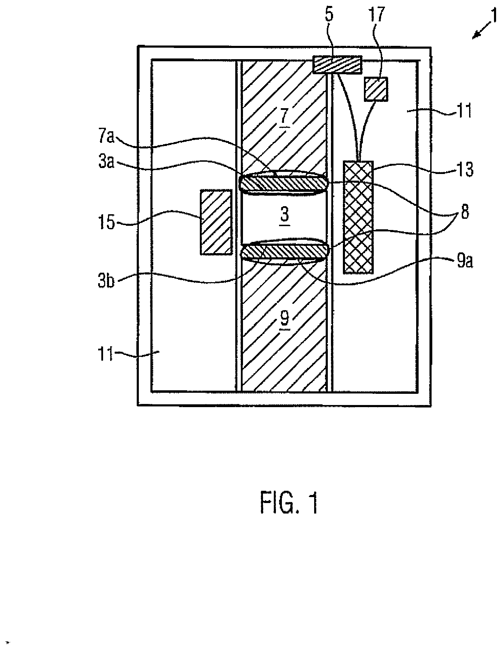

La Figure 1 montre schématiquement un premier mode de réalisation d'un dispositif 1 selon la présente invention.

Le dispositif 1 pour déterminer le risque de gel comprend une unité transductrice 3 comme moyen d'alimentation en énergie autonome et au moins un capteur de température 5. L'unité transductrice 3 génère de l'électricité en utilisant l'effet thermoélectrique. L'unité transductrice 3 permet de générer de l'électricité et d'alimenter le dispositif 1 pour déterminer le risque de gel afin que ce dernier n'ait pas besoin d'être connecté à un dispositif d'alimentation externe. Le dispositif 1 pourra donc être utilisé facilement. L'au moins un capteur de température 5 permet de mesurer la température à l'extérieure du dispositif 1. Le capteur de température 5 est par exemple un thermistor.

Le dispositif 1 comprend en outre deux tiges thermo-conductrices 7, 9, de préférence un métal ou un alliage comme du cuivre, entourant l'unité transductrice 3. La première tige thermo-conductrice 7, via une semelle thermo-conductrice 7a à son extrémité, est en contact avec une première entrée 3a de l'unité transductrice 3, appelée entrée froide. La seconde tige thermo-conductrice 9, via une semelle thermo-conductrice 9a à son extrémité, est en contact thermique avec une deuxième entrée 3b de l'unité transductrice 3, appelée entrée chaude.

La première tige thermo-conductrice 7 et la seconde tige thermo-conductrice 9 sont fixées à l'unité transductrice 3 à l'aide d'une colle thermo-conductrice 8, illustrée par la partie hachurée sur la figure 1. La colle thermo-conductrice 8 se présente au niveau des entrées 3a, 3b de l'unité transductrice 3 afin d'adhérer aux semelles 7a et 9a des tiges thermo-conductrice 7, 9, respectivement. La colle thermo-conductrice 8 permet ainsi un bon contact thermique entre les tiges thermo-conductrices 7, 9 et l'unité transductrice 3. Dans les figures suivantes, la colle thermo-conductrice n'est plus représentée.

Ainsi l'unité transductrice 3 en énergie autonome génère de l'électricité grâce au gradient de température présent entre la semelle thermo-conductrice 7a de la tige 7 et la semelle thermo-conductrice 9a de la tige 9.

L'unité transductrice 3, la première et la seconde tige thermo-conductrices 7, 9 sont entourées d'une ou plusieurs couches de matériaux thermo-isolants 11 pour isoler les tiges thermo-conductrices 7, 9 thermiquement les unes des autres.

Le dispositif 1 comprend en outre un moyen de communication 13 pour transmettre les données d'au moins un capteur de température 5. Le moyen de communication 13 permet de connecter le dispositif à un réseau, type internet ou réseau maillé et la communication peut se faire de préférence sans fil, par exemple par Radio, Bluetooth, NFC ou Wifi. De plus, le moyen de communication 13 est connecté électriquement à l'unité transductrice 3.

Selon une autre alternative avantageuse, le dispositif 1 peut comprendre en outre un dispositif de stockage d'énergie 15. Le dispositif de stockage d'énergie 15 peut être une batterie et/ou un condensateur et/ou un supercondensateur. Ainsi l'électricité générée par l'unité transductrice 3 peut être stockée dans le dispositif de stockage 15 et utilisée en temps voulu. Ceci augmentant alors l'autonomie du dispositif 1.

Selon l'invention, le dispositif 1 comprend en outre un capteur d'humidité 17. Le capteur d'humidité 17 peut être relié au moyen de communication 13 pour transmettre les données du capteur d'humidité 17 et du capteur de température 5. Selon une alternative, le capteur d'humidité 17 peut être placé à l'extérieur du dispositif 1. De plus, le capteur d'humidité 17 peut être une unité indépendante au dispositif 1.

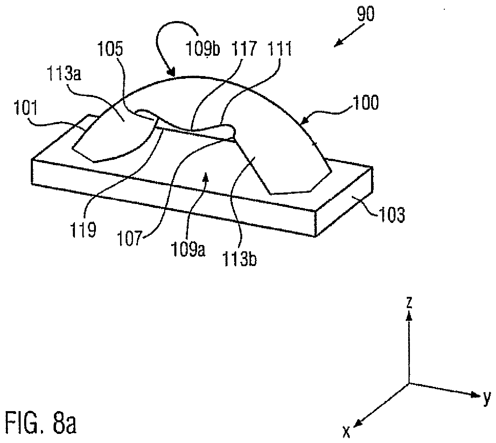

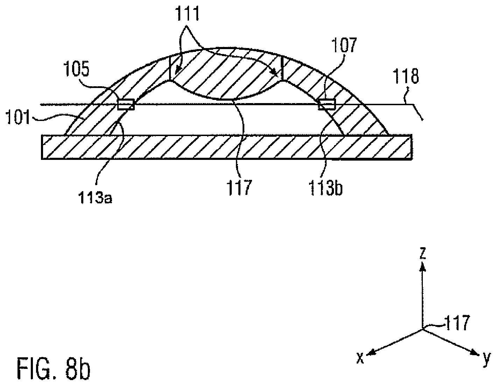

Selon l'invention, le capteur 17 est un capteur d'humidité tel que décrit aux Figures 8 à 11. Avec le dispositif 1 selon la première réalisation, il est ainsi possible de déterminer les risques de gel en obtenant des informations par les capteurs et en communiquant ses informations aux collectivités locales par exemple, afin de prévenir en temps réel du besoin ou non d'une opération de salage ou encore de la fermeture complète d'une route.

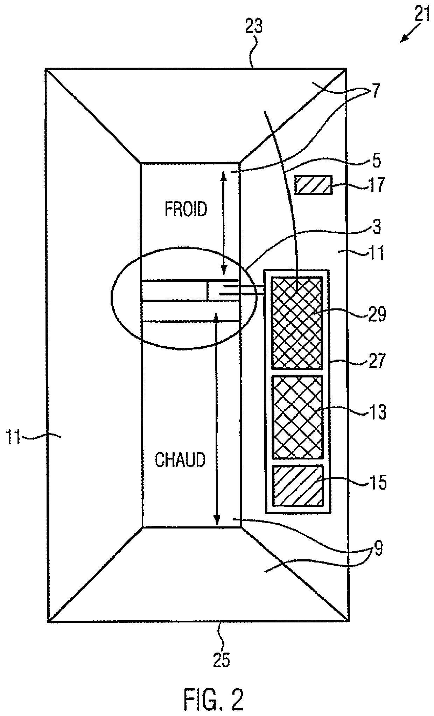

La Figure 2 montre schématiquement un exemple du dispositif 1 selon un second mode de réalisation de la présente invention.

Les dimensions du système sont variables selon les besoins en énergie du dispositif, des lois en vigueur sur l'installation d'objet dans la chaussée, et des capacités des matériaux utilisés pour le dispositif. La distance entre les semelles des tiges thermo-conductrices doit être suffisante afin d'assurer la création d'assez d'électricité pour alimenter les dispositifs de la présente invention.

Le dispositif 21 comprend tous les éléments décrits dans la première réalisation illustrée à la Fig. 1. Les signes de référence des éléments déjà décrits de la Fig. 1 sont par la suite réutilisés de la même façon pour décrire le dispositif 21 de la Fig. 2.

Le dispositif 21 comprend comme décrit dans la Fig. 1 une unité transductrice 3 et une première et seconde tige thermo-conductrices 7, 9.

La première tige 7 et la seconde tige 9 thermo-conductrices s'étendent de l'unité transductrice 3 jusqu'aux surfaces extérieures 23, 25 opposées du dispositif 21, respectivement la surface extérieure 23 et la surface extérieure 25. Par exemple, la surface extérieure 23 du dispositif 21 peut être au niveau du sol et la surface extérieure 25 du dispositif 1 peut être enterrée.

En outre, les tiges thermo-conductrices 7, 9 ont une forme qui s'élargit de l'unité transductrice 3 autonome jusqu'aux surfaces extérieures 23, 25 du dispositif 21. Elles peuvent par exemple avoir la forme de cône tronqué.

Selon un autre mode de réalisation, les tiges thermo-conductrices 7 et 9 ont une forme de cône tronqué avec les semelles 7a et 9a comme base des cônes.

L'unité transductrice 3 est reliée à un module de mesure et de communication 27. Le module 27 est intégré dans le ou les matériaux isolants 11. Le module 27 comprend le moyen de communication 13, permettant de transmettre les données de l'au moins un capteur de température 5, et en outre des données du capteur d'humidité 17 via une connexion sans fils, et le dispositif de stockage d'énergie 15. Le module 27 peut comprendre en outre un dispositif de contrôle 29. Le dispositif de contrôle 29 permet d'activer et/ou désactiver le fonctionnement du dispositif 21. Par exemple, le dispositif 21 ne sera activé que pendant les mois d'hiver, où le risque de gel est présent. De plus, le dispositif de contrôle 29 gère les données des capteurs 5, 17 pour qu'elles puissent être utilisées et transmises par le moyen de communication 13.

Dans cette réalisation, le capteur de température 5 est en contact thermique avec la tige thermo-conductrice 7 pour augmenter la fiabilité de mesure du capteur. De préférence, le capteur 5 est introduit dans la tige thermo-conductrice 7 pour être en contact thermique.

Le capteur d'humidité 17 est placé à l'intérieur du dispositif 21. Selon un autre mode de réalisation, le capteur d'humidité peut être placé à l'extérieur du dispositif, en pouvant être de plus indépendant de celui-ci (se référer à la Figure 8).

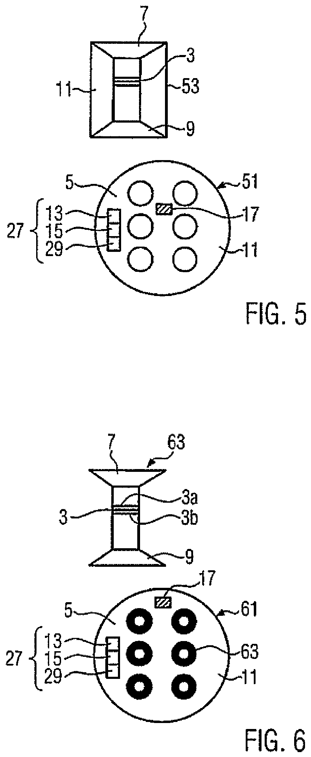

Selon un mode de réalisation avantageux, plusieurs dispositifs 1, 21 peuvent former un système pour déterminer le risque de gel selon la Fig. 5 ou Fig. 6, ci-après.

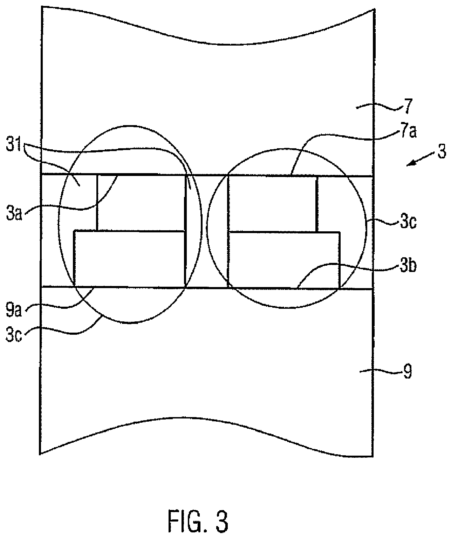

La Figure 3 représente schématiquement une unité transductrice 3. Les signes de référence des éléments déjà décrits des Fig. 1 et 2 sont par la suite réutilisés de la même façon pour décrire la Fig. 3.

L'unité transductrice 3 ici comprend deux thermo-générateurs 3c côte à côte séparés l'un de l'autre par une couche d'isolant thermique 31.

Selon un autre mode de réalisation avantageux, l'unité transductrice peut comprendre plus que deux thermo-générateurs cote à cote séparés les uns des autres par une ou plusieurs couches d'isolant thermique.

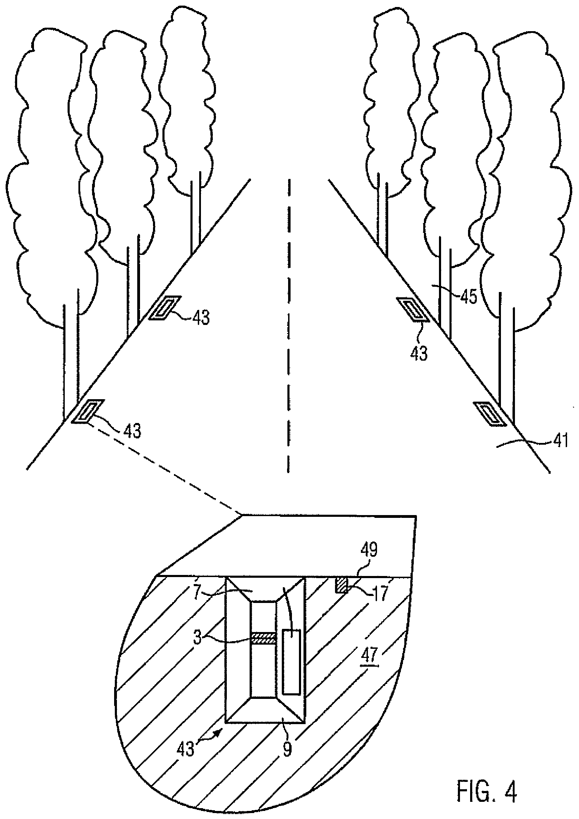

La Figure 4 représente schématiquement une route 41 selon un troisième mode de réalisation de la présente invention. Cette figure illustre comment les dispositifs 1, 21 précédemment décrits peuvent être utilisés.

La route 41 comprend plusieurs dispositifs 43 tels que décrits dans les Fig. 1, 2 ou 3. Les dispositifs 43 peuvent être sur la route 41, de préférence, sur le coté de la route 41. De plus, les dispositifs 43 peuvent être placés sur le bas-côté 45 de la route 41.

De préférence, le dispositif 43 est enterré dans le sol 47 de la route 41, ou dans le sol 47 du bas-côté 45. Le dispositif 43 est enterré de telle sorte que la première tige thermo-conductrice 7 soit au niveau du sol 49.

La tige thermo-conductrice 7 va permettre de conduire la température au niveau du sol 49 vers l'unité transductrice 3. La tige thermo-conductrice 9 est dans le sol 47.. Les variations de température journalières et annuelles étant atténuées et retardées en profondeur par rapport aux variations de température en surface. Un gradient de température est ainsi présent et utilisé pour collecter de l'énergie via l'unité transductrice 3.

Le capteur d'humidité 17 est placé au niveau du sol 49 à l'extérieur du dispositif 43. Le capteur d'humidité 17 peut être placé dans le sol, ou sur le sol. Selon un autre mode de réalisation, le capteur d'humidité peut être intégré au dispositif 43.

La Figure 5 représente schématiquement un système 51 selon un quatrième mode de réalisation de la présente invention.

Le système 51 comprend plusieurs dispositifs 53 et au moins un module de mesure et de communication 27 (un seul module présenté sur la figure). Le dispositif 53 comprend une unité transductrice 3. L'unité transductrice 3 génère de l'électricité en utilisant l'effet thermoélectrique. L'unité transductrice 3 permet de générer de l'électricité et d'alimenter le système 61 pour informer du risque de gel afin que ce dernier n'ait pas besoin d'être connecté à un dispositif d'alimentation externe. Le système 51 pourra donc être utilisé facilement et permettra d'augmenter la quantité d'énergie collectée.

Le dispositif 63 comprend en outre deux tiges thermo-conductrices 7, 9, de préférence dans un métal ou un alliage comme du fer, de la fonte ou de l'acier, entourant l'unité transductrice 3. La fonction de ces tiges thermo-conductrices est la même que décrite dans les figures précédentes.

Ainsi l'unité transductrice 3 génère de l'électricité grâce au gradient de température présent entre la tige thermo-conductrice 7 et la tige thermo-conductrice 9.

L'unité transductrice 3 et les tiges thermo-conductrices 7, 9 sont entourées d'une ou plusieurs couches de matériaux thermo-isolants 11 pour isoler thermiquement à la fois les tiges 7, 9 les unes des autres, et les dispositifs 53 les uns des autres.

Le module de mesure et de communication 27 est Intégré dans le ou les matériaux isolants 11 dans le système 51. Le module 27 comprend le moyen de communication 13, permettant de transmettre les données de l'au moins un capteur de température 5, et en outre des données du capteur d'humidité 17 via une connexion sans fils, et le dispositif de stockage d'énergie 15. Le capteur de température 5 est en contact avec au moins une tige thermo-conductrice 7 des dispositifs 53 du système 51.

La Figure 6 représente schématiquement un système 61 selon un cinquième mode de réalisation de la présente invention.

Le système 61 comprend plusieurs dispositifs 63 et au moins un module de mesure et de communication 27 (un seul module présenté sur la figure).

Le dispositif 63 comprend une unité transductrice 3 comme moyen d'alimentation en énergie autonome. Le moyen d'alimentation 3 en énergie autonome génère de l'électricité en utilisant l'effet thermoélectrique. L'unité transductrice 3 permet de générer de l'électricité et d'alimenter le système 61 pour informer du risque de gel afin que ce dernier n'ait pas besoin d'être connecté à un dispositif d'alimentation externe. Le système 61 pourra donc être utilisé facilement.

Le dispositif 63 comprend en outre deux tiges thermo-conductrices 7, 9, de préférence dans un métal ou un alliage comme du fer, de la fonte ou de l'acier, entourant l'unité transductrice 3. La fonction de ces tiges thermo-conductrices est la même que décrite dans les figures précédentes.

Ainsi l'unité transductrice 3 génère de l'électricité grâce au gradient de température présent entre la tige thermo-conductrice 7 et la tige thermo-conductrice 9.

Les dispositifs 63 sont entourés d'une ou plusieurs couches de matériaux thermo-isolants 11 pour isoler thermiquement les dispositifs 63 les uns des autres.

Le module de mesure et de communication 27 est intégré dans le ou les matériaux isolants 11 du système 61. Le module 27 est tel que décrit à la Fig. 5 de la présente invention.

Le module 27 peut comprendre en outre un dispositif de contrôle 29. Le dispositif de contrôle 29 permet d'activer et/ou de désactiver le fonctionnement du système 61. Par exemple, le système 61 ne sera activé que pendant les mois d'hiver, quand le risque de gel est présent. De plus, le dispositif de contrôle 29 gère les données des capteurs 5, 17 pour qu'elles puissent être utilisées et transmises par le moyen de communication 13.

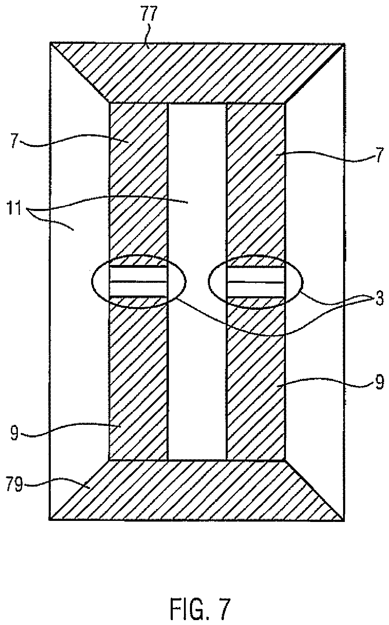

La Figure 7 représente schématiquement une coupe d'un système 71 selon un sixième mode de réalisation de la présente invention. Les signes de référence des éléments déjà décrits précédemment sont par la suite réutilisés de la même façon pour décrire la Fig. 7.

Le système 71 comprend deux unités transductrices 3 comme moyen d'alimentation en énergie autonome. Chaque unité transductrice 3 est entourée de tiges thermo-conductrices 7, 9.

Les deux tiges thermo-conductrices 7 se réunissent à leurs extrémités en une seule semelle thermo-conductrice 77. De même, les deux tiges thermo-conductrices 9 se réunissent à leurs extrémités en une seule semelle thermo-conductrice 79. Ainsi chacune des unités transductrices peut profiter du même échange de chaleur.

Selon un autre mode de réalisation, plus de deux tiges thermo-conductrices associées à différentes unités transductrices peuvent aussi se réunir à leurs extrémités en une seule semelle thermo-conductrice pour profiter du même échange de chaleur.

La Figure 8a représente schématiquement une vue en trois dimensions (3D) d'un capteur d'humidité 90 selon la présente invention. La Figure 8b représente une vue en coupe selon le plan (zOy), le centre du système de coordonnées xyz passant par le point 117.

Le capteur d'humidité 90 comprend un boitier ouvert 100 de façon à permettre une circulation de l'air. Le boitier ouvert 100 comprend une partie supérieure 101 et une partie inférieure 103. Ces parties peuvent être différentes ou seulement deux régions d'un seul élément. Les termes « supérieure » et « inférieure » signifient que la partie supérieure est la partie haute du capteur d'humidité 90 en comparaison à l'autre partie du capteur 90 qui est la partie basse par rapport à la surface sur laquelle ces parties inférieure et supérieure sont arrangées. La partie inférieure 103 est encastrée dans le sol et ne dépasse pas la surface de la chaussée contrairement à la partie supérieure 101. La partie supérieure 101, dans ce mode de réalisation ayant une forme arrondie, est agencée sur la partie inférieure 103 du boitier 100. La partie inférieure 103 forme le socle du boitier et est ici de forme rectangulaire. Néanmoins les deux parties 101 et 103 peuvent avoir d'autres formes. L'air peut circuler à travers le boitier ouvert 100 via les deux ouvertures 109a et 109b du boitier 100 définies par les contours de la partie inférieure 103 et de la partie supérieure 101.

Le boitier 100 comprend, dans la partie supérieure 101, une source de lumière 105 et un capteur optique 107. La source de lumière 105 et le capteur optique 107 peuvent être inclus dans la partie supérieure 101 du boitier 100, permettant de les protéger des saletés, comme la poussière, qui peuvent s'introduire par les ouvertures. De préférence, la source de lumière 105 incluse dans la partie supérieure 101 peut se trouver sur la face latérale 113a du boitier 100 et le capteur optique 107 sur l'autre face latérale 113b opposée. De préférence, la source de lumière 105 est une LED ou un laser et le capteur optique 107 est une photorésistance et/ou une photodiode et/ou un phototransistor.

En outre, le boitier ouvert 100 comprend un plafond intérieur 111. Le plafond intérieur 111 comprend une protubérance orientée vers le bas, donc vers la partie inférieure 103 du boitier ouvert 100, et présentant un point bas 117. Le point bas 117 correspond à un minimum au sens mathématique de hauteur par rapport à la partie inférieure 103. Le point bas 117 se trouve au milieu du plafond intérieur 111, de préférence à équidistance des faces latérales 113a, 113b et des ouvertures 109a et 109b. La source de lumière 105 et le capteur optique 107 sont agencés dans un plan 118 adjacent au point bas 117 de façon à ce que le faisceau lumineux passe sous le point bas 117 pour rejoindre le capteur optique107 depuis la source de lumière 105.

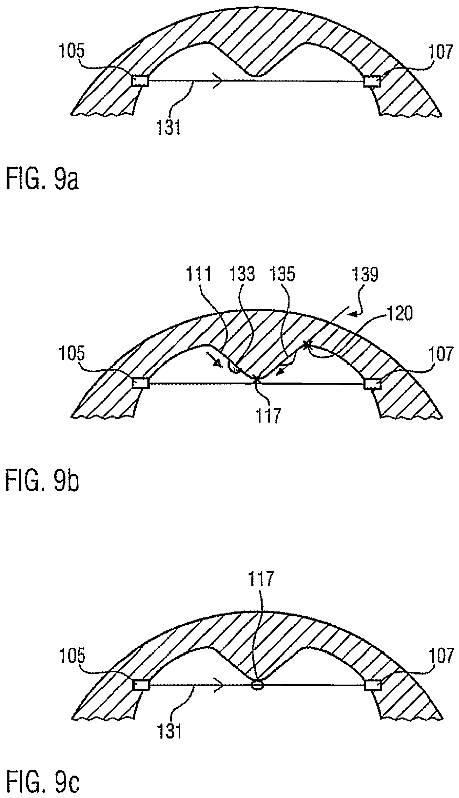

Les Figures 9a, 9b et 9c représentent trois coupes de la Figure 8b. Le capteur d'humidité 90 selon l'invention fonctionne de la manière suivante.

La source de lumière 105 et le capteur optique 107 sont espacés l'un de l'autre et sont alignés de façon à ce que le faisceau lumineux 131 émanant de la source de lumière 105 puisse atteindre le capteur optique 107.

Dans des conditions sèches, le faisceau 131 émanant de la source de lumière 105 atteint le capteur optique 107 de manière non perturbée (Figure 9a). Dans ce cas, il n'y a pas ou peu d'humidité dans l'air et pas de risque de gel, car absence de condensation.

Dans des conditions plus humides, des gouttelettes 133, 135 vont se former sur le plafond 111 par condensation. Par gravité, les gouttelettes vont ensuite s'écouler vers le point bas 117 (se référer à la Figure 9b). La taille des gouttelettes 133, 135 nécessaire pour qu'elle se déplace vers le point bas dépend de l'angle a, défini par l'axe y et la tangente 139 du plafond 111 dans le plan (yOz) à mi-hauteur entre le point bas 117 et la hauteur maximale 120 du plafond 111. L'angle α est compris entre 0 et 90°, et de préférence entre 20° et 70°. Plus l'inclinaison du plafond est importante, plus les gouttelettes 133 et 135 vont ruisseler rapidement en direction du point bas 117 pour former une goutte (se référer à la Figure 9c). Le point bas 117 peut aussi être appelé point de stagnation de l'eau.

La taille possible des gouttelettes suspendues est délimitée par l'équilibre des forces en action sur le fluide, soit la gravité, la pression de l'air, les tensions de surface et les forces de cohésion de l'eau. Cette taille définit la distance maximale à laquelle on peut disposer le faisceau lumineux 131 du point bas 117.

Comme l'axe reliant la source de lumière 105 et le capteur optique 107 passe immédiatement adjacent au point bas 117, le faisceau lumineux 131 doit passer à travers la goutte lorsqu'il y a de l'humidité. La goutte créée au niveau du point bas 117 va perturber totalement ou en partie le faisceau lumineux 131, par exemple par réfraction et/ ou par réflexion. De ceci résulte un changement du signal électrique observé au niveau du capteur 107 dépendant de la présence de la goutte d'eau qui obstrue, au moins partiellement, le faisceau lumineux 131. Le signal observé peut être, selon une réalisation avantageuse, corrélé avec la taille de la goutte qui est elle-même dépendante du taux d'humidité dans l'air. Ainsi sur la base du signal mesuré par le capteur 107, il est possible de déterminer la présence d'humidité dans l'air et ainsi le risque de gel en croisant les données avec un capteur de température.

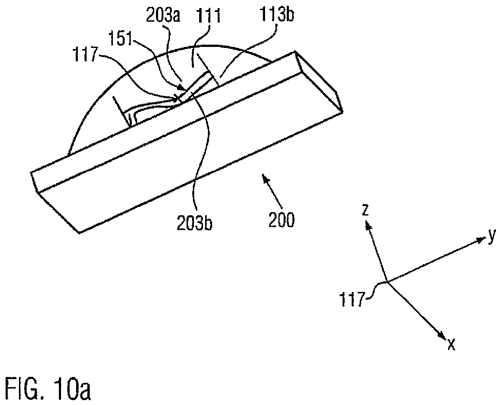

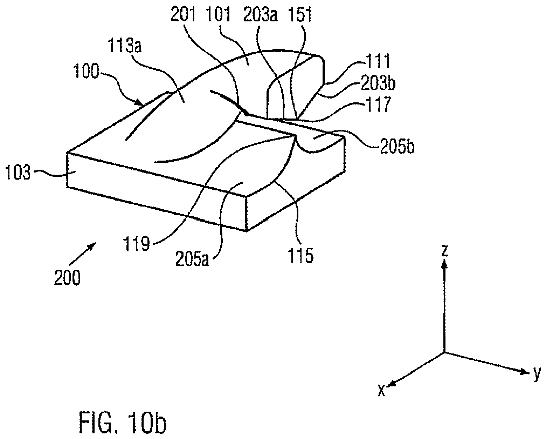

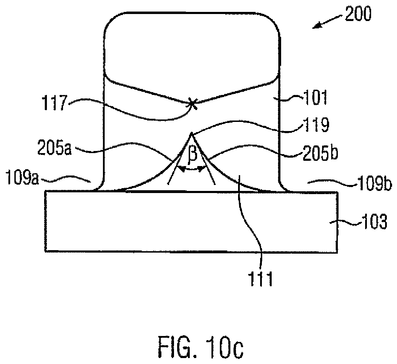

Les Figures 10a, 10b et 10c représentent un autre mode de réalisation. Ce mode de réalisation comprend toutes les caractéristiques décrites dans les modes de réalisation des Figures 8 et 9. Les signes de référence des éléments déjà décrits de la Fig. 8 et 9 sont par la suite réutilisés de la même façon dans la description des figures 10a, 10b et 10c.

La Figure 10a représente une vue en trois dimensions du capteur d'humidité 200 selon un mode de réalisation de la présente invention. La Figure 10a montre que la surface du plafond intérieur 111 descend progressivement selon l'axe z de la première face latérale 113a en se rapprochant du centre 117 pour remonter ensuite selon l'axe z vers la deuxième face latérale 113b. La ligne 151 ainsi créée forme une crête. En effet, les parois 203a et 203b, de part et l'autre de la ligne 151, sont courbées vers le bas, les parois 203a, 203b partent de l'extérieur en direction de la ligne 151. Il faut cependant noter que d'autres formes du plafond soient possibles. Ainsi, lorsqu'il y a de l'humidité, les gouttelettes vont alors d'abord s'accumuler le long de la crête 151 puis converger au niveau du point bas 117 pour former une goutte. Ainsi, on peut améliorer la sensibilité de dispositif, car l'accumulation de l'eau est facilitée.

La Figure 10b représente schématiquement une coupe selon le plan (xOz) du capteur d'humidité 200 qui montre la surface intérieure courbée 203 avec les deux parois 203a, 203b qui s'étendent de l'extérieur vers le point bas 117.

De plus, le boitier ouvert 100 du capteur d'humidité 200 comprend sur sa partie inférieure 103 un fond 115. Le fond 115 comprend une surface intérieure courbée composée de deux parois 205a, 205b qui s'étendent de l'extérieure vers le centre pour également former une crête 119 orientée vers le haut. La crête 119 est dirigée vers le plafond 111 et est de préférence coplanaire avec l'axe du faisceau de la source de lumière 105.

Chacune des parois 205a, 205b, correspondant aux versants de la crête 119, décroit de la crête en direction des ouvertures 109a, 109b. Ainsi, en cas d'humidité, des gouttelettes, formées sur le fond 115, peuvent ruisseler sur les parois 205a, 205b de la surface intérieure de part et d'autre de la crête 119. En éliminant les gouttelettes, des saletés ou des poussières pouvant s'introduire dans le capteur d'humidité 200 par les ouvertures 109a, 109b sont entraînées avec. Ainsi, le risque d'une accumulation de saletés ou poussières au niveau de la crête c'est-à-dire sous la trajectoire du rayon lumineux, est réduit.

La Figure 10c représente schématiquement une vue de face d'une coupe selon le plan (xOz) d'un capteur d'humidité 200 selon une variante de la présente invention. Le capteur d'humidité 200 comprend tous les éléments décrits dans la réalisation illustrée à la Fig. 10a et 10b. Les signes de référence des éléments déjà décrits de la Fig. 10a et 10b sont par la suite réutilisés de la même façon pour décrire la coupe du dispositif 200 de la Fig. 10c.

L'angle β formé par les tangentes au niveau du point haut de la crête 119 entre les versants de la crête, les parois 205a, 205b est compris entre 0° et moins de 180° et de préférence proche de 0°, notamment 1° et 30°, plus en particulier entre 1° et 15°. Ainsi, la limite sur l'axe vertical de la surface intérieure du fond 111 aux points de la crête 119, ou ligne de faîte, tend vers zéro. Le terme « tend vers zéro » signifie que l'extrémité de la crête est pointue, ainsi plus on se rapproche de la crête, ou ligne de faite, plus l'épaisseur diminue. Ainsi les résidus, par exemple saletés ou gouttes d'eau, ne pourront s'accrocher à la pointe ; ils tomberont, ou ruissèleront, d'un côté ou de l'autre de la pointe en raison de la gravité.

Ainsi, plus l'angle formé entre les versants de la crête, les parois 205a, 205b, tend vers zéro, plus les versants se rapprochent au niveau de la crête, ou ligne de faite, plus l'épaisseur diminue. Ainsi les résidus, par exemple saletés ou gouttes d'eau, ne pourront s'accrocher sur la crête 119, ou ligne de faite, et plus les résidus ou saletés pouvant s'introduire dans le capteur d'humidité 200 auront de chance d'être évacués, en raison de la gravité, au niveau des ouvertures 109a, 109b.

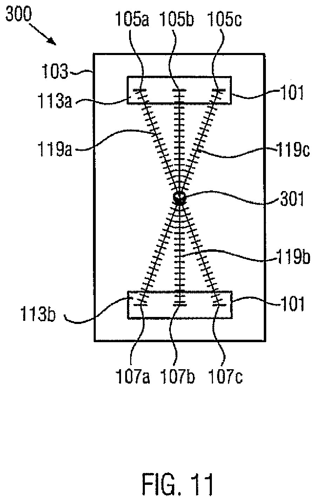

La Figure 11 représente une coupe d'un capteur d'humidité 300 selon un autre mode de réalisation. Ce mode de réalisation comprend toutes les caractéristiques décrites dans les modes de réalisation des Figures 8 à 10.

À la différence des capteurs d'humidité 90, 200, décrits précédemment, le capteur d'humidité 300 comprend trois sources de lumière 105a, 105b, 105c sur la face latérale 113a dans la partie supérieure 101. Le capteur d'humidité 300 comprend en outre trois capteurs optiques 107a, 107b, 107c sur la surface latérale 113b dans la partie supérieure 101. Chacun des faisceaux émanant des sources de lumière 105a, 105b, 105c convergent en dessous du point bas 301, où une goutte d'eau se formera en cas d'humidité, pour atteindre les capteurs optiques 107a, 107b, 107c, respectivement.

La partie inférieure 103 du capteur d'humidité 300 comprend des crêtes 119a, 119b, 119c. Chacune des crêtes 119a, 119b, 119c est coplanaire avec la trajectoire de chacune des trajectoires des faisceaux émanant des sources de lumière 105a, 105b, 105c, respectivement.

Dans les réalisations selon les Figures 8 à 11, les parties supérieure et inférieure 101, 103 du boitier 100 sont faites en matériaux rigides. Par exemple, elles peuvent être faites en acier, en fonte ou en fer. De cette façon, le capteur d'humidité est résistant aux chocs. Par exemple, si le capteur d'humidité est installé au niveau d'une route, le boitier 100 étant par exemple encastré dans le sol, il pourra résister à la masse d'une voiture lui routant dessus. En outre, il est préférable que le boitier 100 soit recouvert ou fait avec un matériau non réfléchissant. En effet, si le capteur est installé au niveau d'une route, cela permettra à ce dispositif de ne pas être dangereux, en éblouissant ou distrayant un automobiliste par exemple.

En outre, dans les réalisations selon les Figures 8 à 11, le plafond intérieur 111 du boitier 100 peut être recouvert au moins partiellement d'un matériau permettant de promouvoir la condensation. De préférence, le plafond intérieur 111 est recouvert entièrement. Par exemple, le plafond intérieur 111 peut être recouvert par une résine. Ainsi, la condensation des gouttelettes d'eau sera favorisée si de l'air humide s'engouffre dans les ouvertures 109a, 109b du capteur d'humidité 90, 200. Les gouttelettes formées seront alors plus grosses et pourront converger plus facilement vers le point bas et le faisceau lumineux émanant de la source de lumière 105 sera au moins en partie dévié permettant au capteur d'humidité 90 d'attester la présence d'humidité. Ainsi le capteur aura plus de sensibilité.

Le capteur d'humidité 90, 200, 300 dans les réalisations selon les Figures 8 à 11 peut être alimenté par un moyen d'alimentation en électricité autonome (non visible sur la figure). De plus, il peut être relié à un moyen de communication (non visible sur la figure) afin de transmettre les données qu'il collecte.

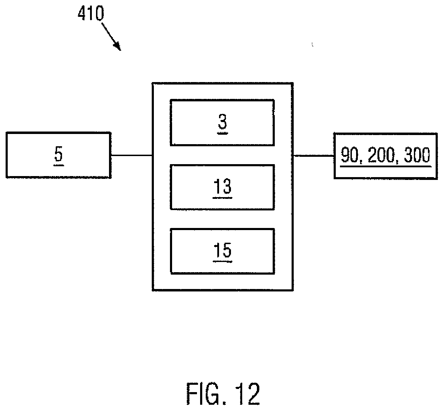

La figure 12 représente schématiquement un dispositif pour déterminer le gel 410 selon un mode de réalisation de la présente invention. Les signes de référence des éléments déjà décrits dans les Figures précédentes sont par la suite réutilisés de la même façon.

Le dispositif pour déterminer le gel 410 comprend un capteur d'humidité 90, 200, 300 ainsi qu'un moyen d'alimentation 3, un capteur de température 5, un moyen de communication 13 et un dispositif de stockage d'énergie 15. Ainsi le dispositif 410 peut transmettre les données du capteur de température 5 et du capteur d'humidité 90, 200, 300 au moyen de communication 13 indiquant s'il y a présence d'un risque de gel ou non.

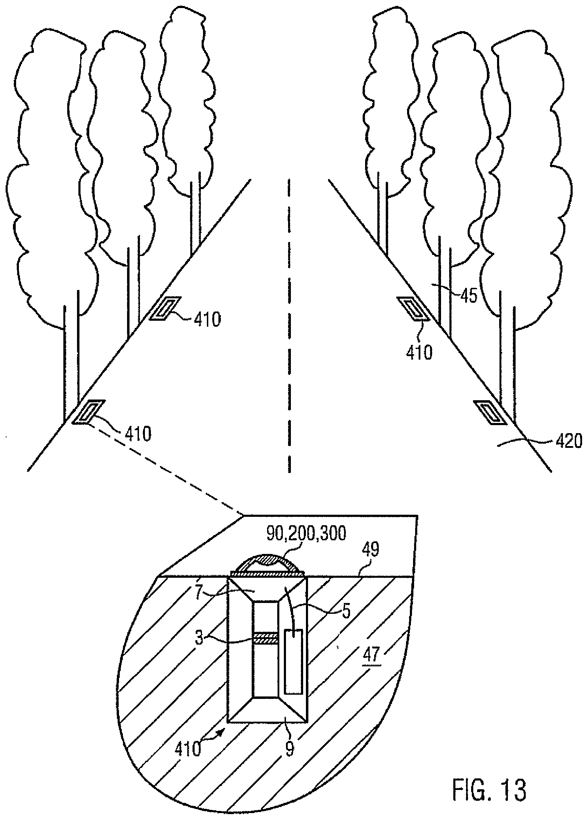

La Figure 13 représente schématiquement une route 420 selon un mode de réalisation de la présente invention. Cette figure illustre comment le dispositif 410 décrit précédemment peut être utilisé. Les signes de référence des éléments déjà décrits dans les Figures précédentes sont par la suite réutilisés de la même façon.

Le capteur d'humidité 90, 200 tel que décrit aux Figures 8 à 11, est placé au niveau du sol 49 à l'extérieur du dispositif 410. Le dispositif 410 est tel que décrit précédemment à la Figure 12. Selon un autre mode le capteur d'humidité pourra être placé à distance du reste du dispositif 410.

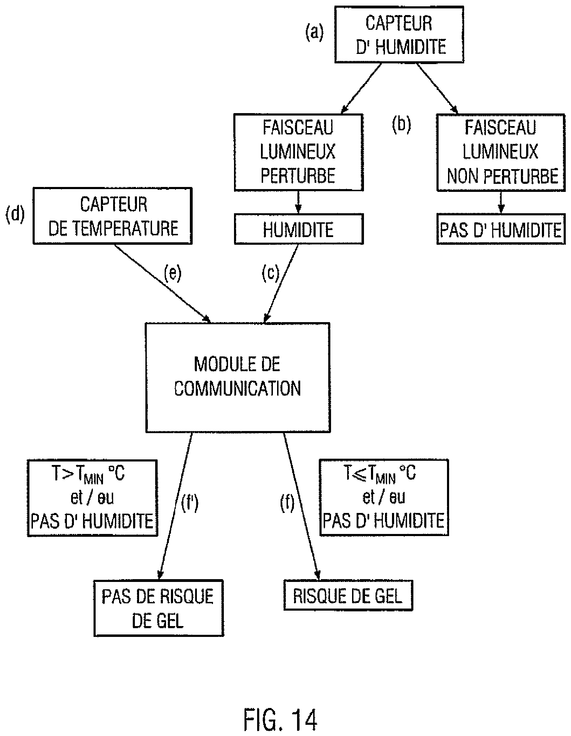

La Figure 14 représente une méthode pour déterminer le risque de gel, utilisant les dispositifs pour déterminer le risque de gel de la présente invention (se référer notamment aux Figures 1, 2, 4 à 7, 12 et 13). L'analyse du risque de gel se divise en deux parties.

La première partie concerne la mesure de l'humidité. Pour cela, dans une première étape (a), le capteur d'humidité, tel que décrit dans les Figures 8 à 10, est activé en allumant la source de lumière pour mesurer de l'intensité du faisceau lumineux reçu par le capteur optique, puis à l'étape (b), le capteur va déterminer la présence d'humidité dans l'air si le faisceau lumineux reçu est perturbé, par exemple par réfraction et/ ou par réflexion, au moins partiellement, ou que l'air est sec, si le faisceau reçu est non perturbé (intensité forte). S'il y a de l'humidité, le capteur d'humidité va à l'étape (c) transmettre ces données au moyen de communication, comme celui décrit précédemment.

La seconde partie de l'analyse concerne la mesure de la température en utilisant un capteur de température comme décrit dans les Figures 1 à 6. Le capteur de température va mesurer la température au sol à l'étape (d) puis, transmettre ses données au moyen de communication selon l'étape (e).

Le moyen de communication va alors transmettre qu'il y a un risque de gel, selon une étape (f) si les données de température montrent qu'elle est inférieure ou égale à une température seuil, par exemple 4°C ou 0°C et en présence d'humidité, soit transmettre qu'il n'y a pas de risque de gel, selon une étape (f') si les données de température montrent qu'elle est supérieure à la température seuil, par exemple 4°C ou 0°C ou en absence d'humidité.

Ainsi, si le moyen de communication transmet qu'il y a un risque de gel, les automobilistes, par exemple, pourront être alertés en temps réel afin d'améliorer la sécurité sur les routes et/ou les autorités pourront être prévenues afin de mettre en place le salage de la ou des routes, ou d'autres dispositions.

## Revendications

1. Un dispositif pour déterminer le risque de gel (410) adapté à être enterré dans le sol avec une surface au niveau du sol, le dispositif comprenant une unité transductrice thermoélectrique (3) comme moyen d'alimentation en électricité autonome; au moins un capteur de température (5) et en outre au moins un capteur d'humidité (17) dans lequel le capteur d'humidité (90) comprend un boîtier (100) ouvert de façon à permettre une circulation de l'air avec à l'intérieur du boîtier (100) au moins une source de lumière (105), comme un laser ou une LED et au moins un capteur optique (107), comme une photorésistance et/ou une photodiode et/ou un phototransistor, dans lequel le boîtier (100) comprend un plafond intérieur (111), dans lequel le plafond intérieur (111) comprend une ou plusieurs protubérances orientées vers le bas présentant un ou plusieurs points bas, de préférence seulement un (117), et en dessous duquel l'au moins une source de lumière (105) et l'au moins un capteur optique (107) sont agencés dans un plan (118) immédiatement adjacent à l'au moins un point bas (117).

2. Le dispositif pour déterminer le risque de gel (410) selon la revendication 1, **caractérisé en ce que** l'unité transductrice (3) utilise l'effet thermoélectrique pour la génération d'électricité, et **en ce que** l'unité transductrice (3) soit placée à l'intérieur du dispositif entre une première (7) et une seconde (9) tige thermo-conductrice.

3. Le dispositif pour déterminer le risque de gel (410) selon la revendication 2, **caractérisé en ce que** la première (7) et la seconde tige (9) s'étendent de l'unité transductrice (3) jusqu'aux surfaces extérieures opposées (23, 25) du dispositif.

4. Le dispositif pour déterminer le risque de gel (410) selon la revendication 2 ou 3, **caractérisé en ce que** l'unité transductrice (3) et la première (7) et seconde (9) tige soient en outre entourées d'une ou plusieurs couches de matériaux thermo-isolants (11, 31), en particulier **en ce que** la première (7) et la seconde (9) tige soient isolées thermiquement l'une de l'autre par une ou plusieurs des couches de matériaux thermo-isolants (11, 31).

5. Le dispositif pour déterminer le risque de gel (410) selon une quelconque des revendications 2 à 4, **caractérisé en ce que** le capteur de température (5) est en contact thermique avec la première tige (7), en particulier introduit dans la première tige (7).

6. Le dispositif pour déterminer le risque de gel (410) selon une quelconque des revendications 2 à 5, **caractérisé en ce que** les tiges (7,9) aient une forme qui s'élargisse de l'unité transductrice (3) vers la surface du dispositif.

7. Le dispositif pour déterminer le risque de gel (410) selon la revendication 1, **caractérisé en ce que** l'axe reliant la source lumière (105) et le capteur optique (107) passe immédiatement adjacent à un ou plusieurs points bas (117).

8. Le dispositif pour déterminer le risque de gel (410) selon une quelconque des revendications 1 ou 7, **caractérisé en ce que** la surface (203) du plafond intérieur (111) soit courbée en son milieu pour former une crête (151) passant par un (117) ou plusieurs points bas.

9. Le dispositif pour déterminer le risque de gel (410) selon une quelconque des revendications 1 à 8, **caractérisé en ce que** le boîtier (100) présente des ouvertures (109a, 109b) au niveau des parois latérales (113a, 113b), pour que l'air puisse circuler de part et d'autre du boîtier (100).

10. Le dispositif pour déterminer le risque de gel (410) selon une quelconque des revendications 1 à 9, caractérisé en ce le boîtier (100) du capteur d'humidité (200) comprenne en outre un fond (115), dans lequel le fond (115) comprend une surface intérieure, dans lequel la surface intérieure comprend une ou plusieurs protubérances pour former au moins un point haut, ou au moins une crête (119), en face du (117) ou des points bas du plafond intérieur (111).

11. Le dispositif pour déterminer le risque de gel (410) selon la revendication 10, **caractérisé en ce que** les protubérances du fond (115) du boîtier (100) soient regroupées pour former une crête (119) par faisceau lumineux (131) dont chaque crête (119), de forme courbe ou droite, est coplanaire avec la trajectoire du faisceau (131) correspondant.

12. Le dispositif pour déterminer le risque de gel (410) selon une quelconque des revendications 10 et 11, **caractérisé en ce que** ladite surface intérieure du fond (111) du boîtier (100) décroît, en particulier de manière régulière, en hauteur depuis l'au moins un point haut, ou de la ligne faîte par l'au moins une crête (119) jusqu'aux ouvertures (109a, 109b) du boîtier (100).

13. Méthode pour déterminer le risque de gel (410) en utilisant un dispositif selon l'une des revendications 1 à 12, comprenant les étapes:
a) allumer la source de lumière (105) du capteur d'humidité (17, 90, 200, 300) et mesurer l'intensité du faisceau lumineux (131) émanant de la source de lumière (105) à l'aide du capteur optique (107) du capteur d'humidité (17, 90, 200, 300);
b) envoyer les données du capteur d'humidité (17, 90, 200, 300) au moyen de communication (13) ;
c) mesurer la température avec le capteur de température (5);
d) envoyer les données du capteur de température (5) au moyen de communication (13);
e) analyse des données des capteurs pour déterminer s'il y a un risque de gel (410).

## Patentansprüche

1. Eine Vorrichtung zur Bestimmung des Frostrisikos (410), die dazu geeignet ist, mit einer Oberfläche auf Bodenhöhe in den Boden eingegraben zu werden, wobei die Vorrichtung eine thermoelektrische Wandlereinheit (3) als eigenständige Stromversorgungseinrichtung; mindestens einen Temperatursensor (5) und des Weiteren mindestens einen Feuchtigkeitssensor (17) umfasst, wobei der Feuchtigkeitssensor (90) ein Gehäuse (100) umfasst, das offen ist, so dass die Luft zirkulieren kann, wobei sich im Innern des Gehäuses (100) mindestens eine Lichtquelle (105), zum Beispiel ein Laser oder eine LED, und mindestens ein optischer Sensor (107), zum Beispiel ein Fotowiderstand und/oder eine Fotodiode und/oder ein Fototransitor befinden, wobei das Gehäuse (100) eine Innendecke (111) umfasst, wobei die Innendecke (111) eine oder mehrere nach unten gerichtete Protuberanzen mit einem oder mehreren untersten Punkten, vorzugsweise nur einem (117), umfasst und unter der die mindestens eine Lichtquelle (105) und der mindestens eine optische Sensor (107) in einer Ebene (118) unmittelbar neben dem mindestens einen untersten Punkt (117) angeordnet sind.

2. Die Vorrichtung zur Bestimmung des Frostrisikos (410) nach Anspruch 1, **dadurch gekennzeichnet, dass** die Wandlereinheit (3) den thermoelektrischen Effekt für die Erzeugung von Elektrizität nutzt und dass die Wandlereinheit (3) im Innern der Vorrichtung zwischen einem ersten (7) und einem zweiten (9) wärmeleitenden Stab positioniert ist.

3. Die Vorrichtung zur Bestimmung des Frostrisikos (410) nach Anspruch 2, **dadurch gekennzeichnet, dass** sich der erste (7) und der zweite Stab (9) von der Wandlereinheit (3) bis zu den gegenüberliegenden Außenflächen (23, 25) der Vorrichtung erstrecken.

4. Die Vorrichtung zur Bestimmung des Frostrisikos (410) nach Anspruch 2 oder 3, **dadurch gekennzeichnet, dass** die Wandlereinheit (3) und der erste (7) und zweite (9) Stab des Weiteren von einer oder mehreren Schichten wärmeisolierenden Materials (11, 31) umgeben sind, insbesondere **dadurch gekennzeichnet, dass** der erste (7) und der zweite (9) Stab durch eine oder mehrere Schichten wärmeisolierenden Materials (11, 31) voneinander isoliert sind.

5. Die Vorrichtung zur Bestimmung des Frostrisikos (410) nach einem der Ansprüche 2 bis 4, **dadurch gekennzeichnet, dass** sich der Temperatursensor (5) in thermischem Kontakt mit dem ersten Stab (7) befindet, insbesondere in den ersten Stab (7) eingeführt ist.

6. Die Vorrichtung zur Bestimmung des Frostrisikos (410) nach einem der Ansprüche 2 bis 5, **dadurch gekennzeichnet, dass** die Stäbe (7,9) eine sich von der Wandlereinheit (3) zur Oberfläche der Vorrichtung verbreiternde Form aufweisen.

7. Die Vorrichtung zur Bestimmung des Frostrisikos (410) nach Anspruch 1, **dadurch gekennzeichnet, dass** die die Lichtquelle (105) und den optischen Sensor (107) verbindende Achse unmittelbar neben einem oder mehreren untersten Punkten (117) verläuft.

8. Die Vorrichtung zur Bestimmung des Frostrisikos (410) nach einem der Ansprüche 1 oder 7, **dadurch gekennzeichnet, dass** die Oberfläche (203) der Innendecke (111) in ihrer Mitte gekrümmt ist, um einen Grat (151) zu bilden, der durch einen (117) oder mehrere unterste Punkte verläuft.

9. Die Vorrichtung zur Bestimmung des Frostrisikos (410) nach einem der Ansprüche 1 bis 8, **dadurch gekennzeichnet, dass** das Gehäuse (100) Öffnungen (109a, 109b) in Höhe der Seitenwände (113a, 113b), aufweist, damit die Luft überall im Gehäuses (100) zirkulieren kann.

10. Die Vorrichtung zur Bestimmung des Frostrisikos (410) nach einem der Ansprüche 1 bis 9, **dadurch gekennzeichnet, dass** das Gehäuse (100) des Feuchtigkeitssensors (200) des Weiteren einen Boden (115) umfasst, wobei der Boden (115) eine Innenfläche umfasst, wobei die Innenfläche eine oder mehrere Protuberanzen umfasst, um mindestens einen höchsten Punkt oder mindestens einen Grat (119) gegenüber des (117) oder der untersten Punkte der Innendecke (111) zu bilden.

11. Die Vorrichtung zur Bestimmung des Frostrisikos (410) nach Anspruch 10, **dadurch gekennzeichnet, dass** die Protuberanzen des Bodens (115) des Gehäuses (100) gruppiert sind, um einen Grat (119) pro Lichtstrahl (131) zu bilden, wobei der Grat (119), der eine gekrümmte oder eine gerade Form aufweist, komplanar mit der Bahn des entsprechenden Strahls (131) ist.

12. Die Vorrichtung zur Bestimmung des Frostrisikos (410) nach einem der Ansprüche 10 und 11, **dadurch gekennzeichnet, dass** besagte Innenfläche des Bodens (111) des Gehäuses (100) insbesondere regelmäßig ab dem mindestens einen höchsten Punkt oder der Scheitellinie über den mindestens einen Grat (119) bis zu den Öffnungen (109a, 109b) des Gehäuses (100) in der Höhe abnimmt.

13. Verfahren zur Bestimmung des Frostrisikos (410) durch Verwendung einer Vorrichtung nach einem der Ansprüche 1 bis 12, umfassend die folgenden Schritte:
a) Einschalten der Lichtquelle (105) des Feuchtigkeitssensors (17, 90, 200, 300) und Messen der Intensität des von der Lichtquelle (105) kommenden Lichtstrahls (131) mithilfe des optischen Sensors (107) des Feuchtigkeitssensors (17, 90, 200, 300);
b) Senden der Daten des Feuchtigkeitssensors (17, 90, 200, 300) an das Kommunikationsmittel (13) ;
c) Messen der Temperatur mit dem Temperatursensor (5);
d) Senden der Daten des Temperatursensors (5) an das Kommunikationsmittel (13);
e) Analyse der Daten der Sensoren zur Bestimmung, ob ein Frostrisiko (410) besteht.

## Claims

1. A device for determining the risk of freezing (410), which is capable of being buried in the ground, having a surface which is at the level of the ground, the device comprising a thermoelectric transducer unit (3) as an autonomous electricity supply means; at least one temperature sensor (5) and in addition, at least one moisture sensor (17), in which the moisture sensor (90) comprises a casing (100) which is open in order to enable air to circulate, with, inside the casing (100), at least one source of light (105), such as a laser or an LED, and at least one optical sensor (107), such as a photoresistor and/or a photodiode and/or a phototransistor, in which the casing (100) comprises an interior ceiling (111), wherein the interior ceiling (111) comprises one or more downwardly orientated protrusions having one or more low points, preferably only one (117), and below which the at least one source of light (105) and the at least one optical sensor (107) are arranged in a plane (118) which is immediately adjacent to the at least one low point (117).

2. The device for determining the risk of freezing (410) as claimed in claim 1, **characterized in that** the transducer unit (3) uses the thermoelectric effect in order to generate electricity, and **in that** the transducer unit (3) is placed in the interior of the device between a first (7) and a second (9) heat conducting bar.

3. The device for determining the risk of freezing (410) as claimed in claim 2, **characterized in that** the first bar (7) and the second bar (9) extend from the transducer unit (3) to the opposed exterior surfaces (23, 25) of the device.

4. The device for determining the risk of freezing (410) as claimed in claim 2 or claim 3, **characterized in that** the transducer unit (3) and the first bar (7) and second bar (9) are furthermore surrounded by one or more of the layers of thermally insulating materials (11, 31), in particular **in that** the first bar (7) and the second bar (9) are thermally insulated from each other by one or more layers of thermally insulating materials (11, 31).

5. The device for determining the risk of freezing (410) as claimed in any one of claims 2 to 4, **characterized in that** the temperature sensor (5) is in thermal contact with the first bar (7), and in particular is introduced into the first bar (7).

6. The device for determining the risk of freezing (410) as claimed in any one of claims 2 to 5, **characterized in that** the bars (7, 9) have a shape which broadens from the transducer unit (3) towards the surface of the device.

7. The device for determining the risk of freezing (410) as claimed in claim 1, **characterized in that** the passage of the axis connecting the source of light (105) and the optical sensor (107) is immediately adjacent to one or more low points (117).

8. The device for determining the risk of freezing (410) as claimed in any one of claims 1 or 7, **characterized in that** the surface (203) of the interior ceiling (111) is curved at its centre in order to form a ridge (151) passing through one (117) or more low points.

9. The device for determining the risk of freezing (410) as claimed in any one of claims 1 to 8, **characterized in that** the casing (100) has openings (109a, 109b) at the side walls (113a, 113b) so that air can circulate on both sides of the casing (100).

10. The device for determining the risk of freezing (410) as claimed in any one of claims 1 to 9, **characterized in that** the casing (100) of the moisture sensor (200) furthermore comprises a base (115), in which the base (115) comprises an interior surface in which the interior surface comprises one or more protrusions in order to form at least one high point or at least one ridge (119) which faces the low point (117) or points of the interior ceiling (111).

11. The device for determining the risk of freezing (410) as claimed in claim 10, **characterized in that** the protrusions of the base (115) of the casing (100) are grouped together to form one ridge (119) per beam of light (131), wherein each ridge (119), with a curved or straight shape, is coplanar with the trajectory of the corresponding beam (131).

12. The device for determining the risk of freezing (410) as claimed in any one of claims 10 or 11, **characterized in that** said interior surface of the base (111) of the casing (100) decreases in height, in particular in a regular manner, from the at least one high point or from the line made by the at least one ridge (119) to the openings (109a, 109b) of the casing (100).

13. A method for determining the risk of freezing (410) using a device as claimed in one of claims 1 to 12, comprising the steps of:
a) switching on the source of light (105) of a moisture sensor (17, 90, 200, 300) and measuring the intensity of the beam of light (131) emanating from the source of light (105) with the aid of an optical sensor (107) of the moisture sensor (17, 90, 200, 300);
b) sending the data from the moisture sensor (17, 90, 200, 300) to communication means (13);
c) measuring the temperature with the temperature sensor (5);
d) sending the data from the temperature sensor (5) to the communication means (13);
e) analysing the data from the sensors in order to determine whether there is a risk of freezing (410).
